# EUROPÄISCHE PATENTSCHRIFT

(11) **EP 0 534 309 B1**
(45) Veröffentlichungstag und Bekanntmachung des Hinweises auf die Patenterteilung: **02.08.1995**
(21) Anmeldenummer: 92115886.1
(22) Anmeldetag: 17.09.1992
(51) Int. Cl.: B60T 11/224

(54) **Zweistufiges Ventil**
Two-step valve
Soupape à deux étages

(30) Priorität: 27.09.1991 DE 4132245
(43) Veröffentlichungstag der Anmeldung: 31.03.1993
(73) Patentinhaber: DEERE & COMPANY, Moline, Illinois 61265 (US)
(72) Erfinder: Gawlick, Dieter, W-6700 Ludwigshafen (DE)
(74) Vertreter: Feldmann, Bernhard

(56) Entgegenhaltungen:
- EP-A- 0 036 253
- DE-A- 1 680 211
- DE-A- 2 828 199
- DE-A- 3 837 650

## Beschreibung

Die Erfindung betrifft ein zweistufiges Ventil, insbesondere Bremsventil, mit zwei Querschnittsstufen, deren Wirkquerschnitte nacheinander wirksam werden, indem zunächst der größere Wirkquerschnitt zum Befüllen einer Anlage verwendet wird und dann nach einer Übergangsphase ausschließlich der kleinere Wirkquerschnitt zum Aufbringen des Arbeitsdruckes eingesetzt wird. Das Ventil enthält ein zwischen dem Druckraum des größeren Wirkquerschnitts und einem Vorratsbehälter angeordnetes Rückschlagventil, das bei einem vorgebbaren, im Druckraum des größeren Wirkquerschnitts herrschenden Grenzdruck öffnet.

Aus der DE-A-1 680 211 ist ein zweistufiges Bremsventil der eingangs genannten Art bekannt geworden, bei dem der große Wirkquerschnitt durch einen Füllkolben gebildet wird, der dichtend in einer Sackbohrung im Ventilgehäuse angeordnet ist und sich in der Sackbohrung durch eine Kolbenstange verschieben läßt. Die Kolbenstange läßt sich von einer Bedienungsperson über ein Bremspedal und zugehörige Übertragungsmittel betätigen. Der dem größeren Wirkquerschnitt entsprechende erste Druckraum befindet sich vor der Stirnseite des Füllkolbens. Der Füllkolben enthält eine zu seiner Stirnseite hin offene axiale Bohrung, die einen am Ventilgehäuse festgelegten, jedoch innerhalb der Bohrung verschiebbaren Schaft aufnimmt, wodurch sich innerhalb des Füllkolbens ein zweiter Druckraum mit einem kleineren Wirkquerschnitt ausbildet. Der Schaft weist eine mittige Bohrung auf, über die der zweite Druckraum mit der Bremsleitung in Verbindung steht. Der erste Druckraum ist über ein in einer Rücklaufleitung angeordnetes Einwegventil mit einem Vorratsbehälter verbunden. Bei Überschreiten eines vorgebbaren Druckes in dem ersten Druckraum öffnet das Einwegventil. Zwischen dem zweiten Druckraum und dem ersten Druckraum befindet sich eine Ventilanordnung, die zunächst einen Flüssigkeitsaustausch zwischen den Druckräumen zuläßt und erst bei Überschreiten eines vorgebbaren Differenzdruckes zwischen den Druckräumen diese gegeneinander abdichtet. Während einer ersten Bewegungsphase des Füllkolbens wird die Bremskammer der Bremse gefüllt, bis der Druck in der ersten Druckkammer so weit ansteigt, daß das Einwegventil öffnet. Bei weiterer Betätigung des Füllkolbens steigt der Druck in dem zweiten Druckraum weiter an und führt zum Schließen der Ventilanordnung zwischen den Druckräumen, so daß in einer Druckphase nur noch der kleinere Wirkquerschnitt des Schaftes bei der Erzeugung des Arbeitsdruckes wirksam ist und mit vergleichsweise geringer Betätigungskraft ein hoher Bremsdruck aufgebracht werden kann. Jedoch herrscht während der Druckphase in dem ersten Druckraum weiterhin ein Druck, der dem Öffnungsdruck des Einwegventils entspricht. Daher muß die Bedienungsperson in der Druckphase zusätzlich zu einer Kraft zur Erzeugung des Arbeitsdruckes eine Kraft aufbringen, die dem Öffnungsdruck in dem ersten Druckraum entspricht.

Um den erforderlichen Druck während der Druckphase zu vermindern, wurde durch die DE-A-38 37 650 ein Bremsventil vorgeschlagen, das ähnlich zu dem soeben beschriebenen Ventil aufgebaut ist, bei dem jedoch der Druckraum mit dem größeren Wirkquerschnitt während der Druckphase ständig unmittelbar mit dem Vorratsbehälter verbunden ist. Dies führt jedoch zu einem plötzlichen Druckabfall im Druckraum beim Übergang von der Befüllphase zur Druckphase.

Es hat sich bei dem zuletzt beschriebenen Bremsventil herausgestellt, daß beim Umschalten von dem größeren Wirkquerschnitt auf den kleineren Wirkquerschnitt, bei dem eine Verbindung zwischen dem Druckraum des größeren Wirkquerschnitts zum Vorratsbhälter plötzlich geöffnet wird, hingegen der Druck im Druckraum mit dem kleineren Wirkquerschnitt für die Zeit des Umschaltens auf annähernd konstantem Druckniveau liegt, die erforderliche Fußkraft sich plötzlich absenkt. Auf diesen sich sprunghaft ändernden Kraftbedarf kann sich die Bedienungsperson mit ihrem begrenzten Reaktionsvermögen jedoch nicht schnell genug einstellen. Dies hat zur Folge, daß die Bedienungsperson mit gleichbleibender Kraft, die sie für den größeren Wirkquerschnitt beim Befüllen der Bremse aufbrachte, auch in der zweiten Druckphase, bei der nur der kleinere Wirkquerschnitt wirksam ist, das Bremspedal niederdrückt. Eine konstant gehaltene Betätigungskraft erzeugt bei einem kleinen Wirkquerschnitt einen höheren Druck als bei einem großen Wirkquerschnitt. Ein plötzlicher Druckanstieg in der Leitung zum Bremszylinder (Arbeitsorgan) hat eine plötzlich einsetzende Bremswirkung und einen plötzlichen Anstieg der Verzögerung des Fahrzeuges zur Folge. Dies bedeutet, daß der Zusammenhang zwischen Fußkraft und Verzögerung nicht proportional oder in sanften Übergängen stattfindet, sondern sprunghaft ist, was jedoch bei Fahrzeugbremsen unzulässig, wenigstens jedoch unerwünscht ist.

Die DE-A-28 28 199 beschreibt einen zweistufigen Hauptbremszylinder, dessen Gehäuse eine Stufenbohrung mit zwei Bohrungsabschnitten unterschiedlicher Durchmesser aufweist. In den Bohrungsabschnitten befindet sich eine Kolbenanordnung, durch die eine Druckkammer größeren Querschnitts und eine Auslaßkammer kleineren Querschnitts gebildet werden. Indem die Kolbenanordnung einer Bremspedalkraft ausgesetzt wird, läßt sich die in den Bohrungsabschnitten befindliche Bremsflüssigkeit unter Druck setzen, um über Auslaßöffnungen die Radbremszylinder zu betätigen. Ein Druckentlastungskanal mündet in die Stufenbohrung und ermöglicht eine Durchflußverbindung zwischen der Druckkammer und einem Bremsflüssigkeitsbehälter` sofern die Kolbenanordnung aus ihrer Ruhelage in eine Bremsposition verschoben wurde. Die Durchflußverbindung wird durch ein Steuerventil kontrolliert. Das Steuerventil enthält einen federbelasteten Steuerkolben, an dessen erste Stirnfläche eine Steuerkammer angrenzt, die über einen Steuerkanal dem Druck der Auslaßkammer ausgesetzt ist, um den Steuerkolben gegen die Kraft der Feder zu verschieben. Die zweite Stirnfläche des Steuerkolbens ist dem Druck des Bremsflüssigkeitsbehälters ausgesetzt. Sie trägt einen Ventilschieber, der die Durchflußverbindung zwischen Druckraum und Bremsflüssigkeitsbehälter mit zunehmendem auf die Stirnfläche lastenden Druck öffnet. Um eine stetige Umschaltung der auf die Kolbenanordnung gegebenen Bremspedalkraft von dem Kolben großen Durchmessers auf den Kolben kleinen Durchmessers zu ermöglichen, wird im wesentlichen vorgeschlagen, den Strömungsquerschnitt in der Durchflußverbindung in Abhängigkeit des Arbeitsdruckes in der Auslaßkammer einzustellen. Hierfür werden unterschiedliche Lösungen angegeben. Bei einer ersten Lösung enthält der Ventilschieber eine keilförmige Rampe,durch die sich mit stetiger Verschiebung des Steuerkolbens eine Durchflußöffnung für Bremsflüssigkeit öffnen und stetig vergrößern läßt. Bei einer zweiten Lösung wirkt der Ventilschieber auf einen um eine Achse verschwenkbaren Hebel, auf welchem ein Ventilteller befestigt ist, der mit einer Austrittsöffnung des Druckentlastungskanals zusammenwirkt und diese mit zunehmender Verschiebung des Steuerkolbens stetig öffnet. Bei der dritten Lösung trägt der Ventilschieber eine konische Oberfläche, die mit einem Ventilsitz zusammenwirkt, um eine in ihrem Querschnitt einstellbare Steueröffnung zu bilden. Die Querschnittsfläche des über die Steueröffnung hergestellten Strömungsmittelweges ist auch hier durch eine vom Druck in der Auslaßkammer hervorgerufene Verschiebung des Steuerkolbens einstellbar. Bei allen Lösungen ist der Strömungsquerschnitt zwischen der Druckkammer und dem Bremsflüssigkeitsbehälter unmittelbar von dem Druck in der Auslaßkammer abhängig. Dies hat zur Folge, daß bei einer ausreichenden Bremspedalbetätigung mit gleichbleibender Kraft ein bestimmter Strömungsquerschnitt freigegeben wird, so daß der Druck in der Druckkammer stetig abfällt, bis diese drucklos ist. Damit fällt auch der von der Druckkammer aufgenommene Kraftanteil der Pedalkraft stetig ab. Dies führt zu einer Erhöhung des Kraftanteils, der von der Auslaßkammer aufgenommen wird. Der Druck in der Auslaßkammer steigt daher an und führt zu einer Erhöhung der Bremskraft, ohne daß das Bremspedal stärker betätigt wurde. Dies führt zu einem nachteiligen Bremsverhalten.

Die der Erfindung zugrunde liegende Aufgabe wird darin gesehen, ein zweistufiges Ventil der eingangs genannten Art anzugeben, bei dem die erforderliche Betätigungskraft klein gehalten werden kann und eine sprunghafte Änderung des Arbeitsdruckes, insbesondere während des Durchschreitens der Übergangsphase vermieden wird.

Die Aufgabe wird für ein zweistufiges Ventil der eingangs genannten Art dadurch gelöst, daß die dem vorgebbaren Grenzdruck entsprechende Schließkraft des Rückschlagventils in Abhängigkeit des Arbeitsdruckes steuerbar ist.

Die Steuerung erfolgt vorzugsweise derart, daß während und nach der Übergangsphase die Hydraulikflüssigkeit aus dem Druckraum, dem der größere Wirkquerschnitt zugeordnet ist, bei steigendem Arbeitsdruck (Bremsdruck) mit kontinuierlich sinkendem Gegendruck abfließt. Dieses allmähliche Absinken des Druckes in besagtem Druckraum bewirkt einen fließenden Übergang der Kraft-Arbeitsdruck-Kennlinie (Fußkraft-Bremsdruck-Kennlinie) während der Übergangsphase, bei der aus einer Füllphase, in der der größere Wirkquerschnitt wirksam ist, zu einer Druckphase, in der der kleinere Wirkquerschnitt wirksam ist, übergegangen wird. Der Druck in dem Druckraum mit dem größeren Wirkquerschnitt kann dabei mit Erreichen eines bestimmten Arbeitsdrucks so klein werden, daß er dem Druck im Vorratsbehälter entspricht, so daß nahezu keine Kraft zur Überwindung des Druckes in besagtem Druckraum mehr aufzubringen ist.

Vorzugsweise weist das Rückschlagventil einen Ventilkörper, beispielsweise einen Ventilkegel oder eine Ventilkugel auf, der oder die sich bei ausreichendem Druck im Druckraum, dem der größere Wirkquerschnitt zugeordnet ist, gegen die Kraft einer Rückschlagventilfeder von einem zugehörigen Sitz abhebt und eine Passage zum Vorratsbehälter freigibt. Die auf den Ventilkörper einwirkende Kraft der Rückschlagventilfeder läßt sich zweckmäßigerweise in Abhängigkeit des Arbeitsdrucks steuern.

Einer bevorzugten Ausgestaltung der Erfindung zufolge wirkt der Arbeitsdruck auf einen Steuerschieber, der die Schließkraft des Rückschlagventils derart beeinflußt, daß diese mit steigendem Arbeitsdruck abnimmt. Der Steuerschieber kann dabei einerseits dem Arbeitsdruck und andererseits der entgegenwirkenden Kraft einer Steuerschieberfeder ausgesetzt sein.

Eine günstige Kennlinie ergibt sich dadurch, daß der Steuerschieber durch den Arbeitsdruck in eine Richtung gedrängt wird, in der er derart auf die Schließeinrichtung des Rückschlagventils einwirkt, daß die Schließkraft mit steigendem Arbeitsdruck abnimmt.

Eine einfache wirkungsvolle Ausgestaltung der Erfindung ist dadurch gegeben, daß die Rückschlagventilfeder sich an dem Steuerschieber abstützt und in gleicher Richtung auf den Steuerschieber wirkt wie der Arbeitsdruck. Zweckmäßigerweise ist die Federkraft der Rückschlagventilfeder kleiner als die Federkraft der Steuerschieberfeder.

Um einem schnellen Reagieren des Steuerschiebers entgegen zu wirken und daraus resultierende Schwingungen zu dämpfen, ist es vorteilhaft, daß der durch den Steuerschieber begrenzte, auf der Seite des größeren Querschnittes liegende Hohlraum durch wenigstens einen gedrosselten Ausgleichskanal mit dem Vorratsbehälter verbunden ist. Ferner ist es hierbei zweckmäßig, in dem Steuerschieber einen Längskanal, durch den dessen beide Stirnseiten miteinander verbunden sind, vorzusehen. Diese Merkmale bewirken, daß sich auf der dem Rückschlagventil abgewandten Seite des Steuerschiebers ein Druck aufbaut, der beim Eintritt in die Übergangsphase einer schnellen Verschiebung des Steuerschiebers und damit einem schnellen Öffnen des Rückschlagventils entgegenwirkt, wodurch einem Schwingungsverhalten entgegengewirkt wird.

Weitere vorteilhafte Ausgestaltungen und Weiterbildungen der Erfindung gehen aus den Unteransprüchen hervor.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: die Schnittdarstellung eines erfindungsgemäßen zweistufigen Bremsventils und
- Fig. 2: den Schnitt durch ein zum Bremsventil gehörendes Steuerventil in vergrößerter Darstellung.

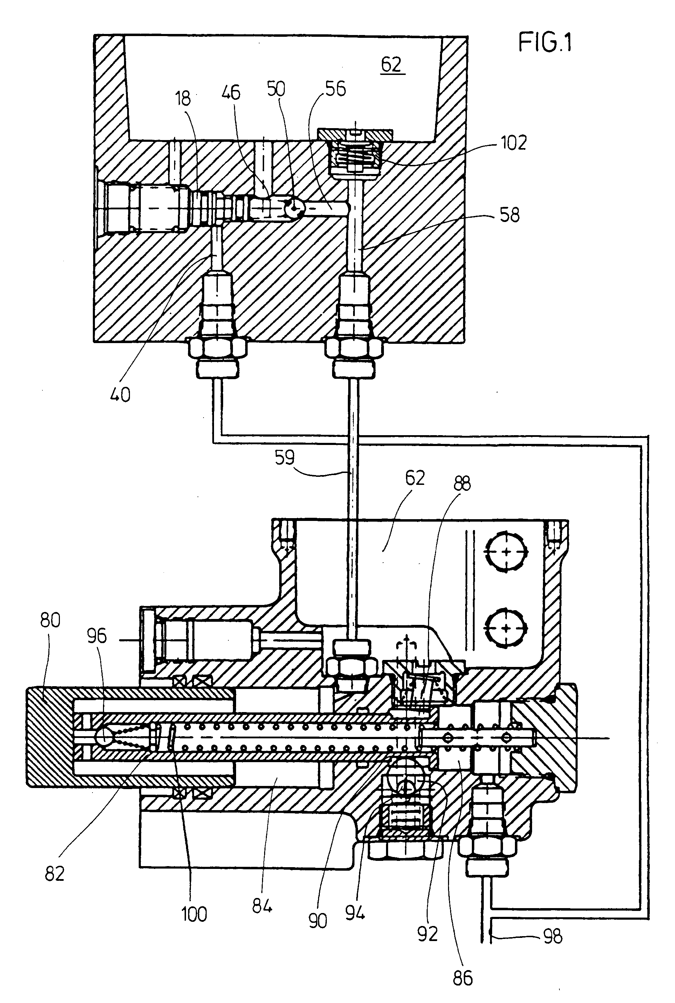

Im unteren Bereich der Fig. 1 ist der Schnitt durch einen Stufen-Hauptzylinder eines Bremsventils dargestellt, welcher zwei Kolben unterschiedlichen Durchmessers aufnimmt. Hierbei handelt es sich um einen großen Füllkolben 80 und einen kleinen Druckkolben 82. Die Druckräume der Kolben werden daran anlehnend vereinfacht mit Füllstufe 84 und Druckstufe 86 bezeichnet.

Die Wirkungsweise dieses Stufen-Hauptzylinders ist folgende:
Durch Betätigung des nicht dargestellten Bremsfußhebels erfolgt ein gemeinsamer Druck auf den Füllkolben 80 und den Druckkolben 82. Bei Einsetzen der Kolbenbewegung wird das Einlaßventil 88 freigegeben, welches sofort schließt. Kurz darauf drückt der Kolbenbund 90 des Druckkolbens 82 auf die Kugel des Ausgleichsventils 92 und öffnet dieses. Die Druckstufe 86 hinter dem Druckkolben 82 ist nun zum Vorratsbehälter 62 verschlossen.

Das Ausgleichsventil 92 steht über eine Querbohrung 94 mit dem Ausgleichsventil eines zweiten nicht dargestellten Bremsventils in Verbindung, wobei ein Bremsventil für eine linke und das andere Bremsventil für eine rechte Betriebsbremse vorgesehen ist. Bei Betätigung sowohl des linken als auch des rechten Bremsfußhebels öffnen beide Ausgleichsventile, so daß ein Druckausgleich zwischen beiden Bremsseiten stattfindet und ein gleichmäßiges Bremsen ermöglicht wird.

Der Füllkolben 80 muß bei gleicher Wegstrecke eine größere Ölmenge verdrängen als der Druckkolben 82. Daher entsteht in der Füllstufe 84 ein Überdruck, welcher das Rückschlagventil 96 öffnet. Bei weiterer Vorwärtsbewegung der Kolben 80, 82 wird Öl aus der Füllstufe 84 über das Rückschlagventil 96 in die Druckstufe 86 und von dort weiter in die Bremsleitung 98 und in die Bremse gedrückt. Dadurch wird der Druckring der Bremse an deren Bremsscheibe angelegt. Dies erfolgt bei relativ kurzem Kolbenhub. Bei weiterer Vorwärtsbewegung der Kolben 80, 82 wird der Bremsdruck aufgebaut.

Wird das Bremspedal losgelassen, drückt die Hauptfeder 100 die Kolben 80, 82 in ihre Ausgangsstellung zurück. Der zurückweichende Füllkolben 80 saugt über das Entlastungsventil 102 Öl aus dem Vorratsbehälter 62 an. Das aus der Bremse zurückfließende Öl gelangt in die Druckstufe 86. Über das in Ausgleichsstellung des Druckkolbens 82 geöffnete Einlaßventil 88 erfolgt der Druckausgleich.

Der Bremsvorgang ist also in zwei Phasen gegliedert. In der ersten Phase wird mit geringerem Kolbenweg eine große Ölmenge verdrängt und die Bremse angelegt. In der zweiten Phase wird mit geringerer Kraft ein hoher Druck erzeugt.

Die erste Phase wird mit Füllphase, die zweite mit Druckphase bezeichnet.

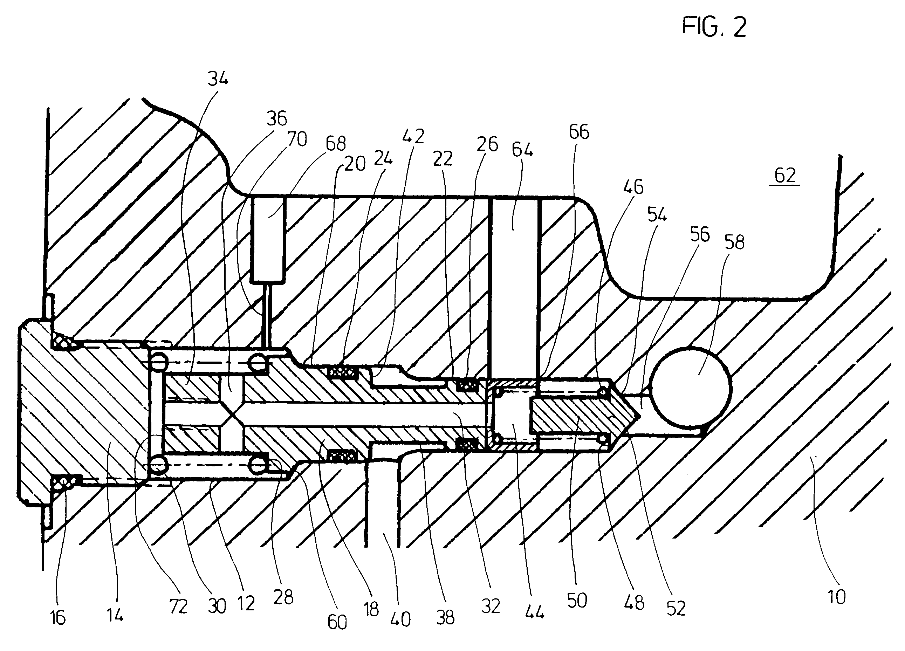

Damit die Pedalkraft beim Bremsen gleichmäßig mit dem Bremsdruck ansteigt, wird der Übergang von der Füllphase in die Druckphase durch das im oberen Teil der Fig. 1 dargestellte Steuerventil stufenlos reguliert. Einzelheiten dieses Steuerventils werden anhand der Fig. 2 erläutert.

In dem Ventilgehäuse 10 befindet sich eine stufenförmig ausgebildete Bohrung 12, deren Durchmesser mit zunehmender Tiefe abnimmt. Die Bohrung 12 ist an der Gehäuseoberfläche durch einen einschraubbaren Stopfen 14, der eine Dichtung 16 trägt, hermetisch verschlossen. Der Bereich der Bohrung 12, der sich an den Stopfen 14 anschließt, nimmt einen axial verschiebbaren Steuerschieber 18 auf. Der Steuerschieber 18 liegt im wesentlichen in zwei Abschnitten 20, 22, die unterschiedliche Durchmesser aufweisen, an der Bohrungswandung an und wird hier durch ringförmige Dichtungen 24, 26 gegen die Bohrungswandung abgedichtet. Zwischen dem Stopfen 14 und einer Stirnfläche 28 des Steuerschiebers 18 ist eine schraubenförmige Druckfeder 30 eingespannt, durch die der Steuerschieber 18 ins Innere der Bohrung 12 gedrängt wird.

Durch den ganzen Steuerschieber 18 erstreckt sich ein axialer Längskanal 32. In einem Ansatz 34 des Steuerschiebers 18, der an der Stirnfläche 28 angeformt ist und sich in Richtung Stopfen 14 erstreckt, befindet sich eine radiale Bohrung 36, die den Längskanal 32 mit der Steuerschiebermantelfläche verbindet.

In seinem mittleren, zwischen den beiden Abschnitten 20, 22 liegenden Bereich ist in den Steuerschiebermantel eine Ringnut 38 eingelassen. Im Bereich der Ringnut 38 mündet ein im Ventilgehäuse 10 verlaufender Kanal 40, der den Arbeitsdruck des Bremsventils führt und beispielsweise an eine zwischen Bremsventil und Bremse verlaufende Leitung 98 angeschlossen ist. Der dem Stopfen 14 zugewandte Abschnitt 20 des Steuerschiebers 18 weist einen größeren Durchmesser auf, als der diesem gegenüberliegende Abschnitt 22, so daß eine sich durch die Querschnittsdifferenz ergebende wirksame Stufe 42 an der dem Stopfen 14 zugewandten Seite der Ringnut 38 ausgebildet ist. Ein Flüssigkeitsdruck in dem Kanal 40 wirkt damit auf die Stufe 42 und drückt den Steuerschieber gegen die Kraft der Steuerschieberfeder 30 in Richtung des Stopfens 14.

An dem dem Stopfen 14 abgewandten Ende des Steuerschiebers 18 weist dieser eine zylindrische Ausnehmung 44 auf, welche in ihrem Inneren ein Ende einer Schraubendruckfeder aufnimmt, die als Rückschlagventilfeder 46 dient. Diese Rückschlagventilfeder 46 drückt mit ihrem anderen Ende gegen eine radiale Fläche 48 des Ventilkörpers 50 eines Rückschlagventils, der auf seiner bezüglich des Steuerschiebers 18 abgewandten Seite einen Ventilkegel 52 trägt. Der Ventilkegel 52 wirkt mit einem Sitz 54 in der Bohrung 12 zusammen, deren am tiefsten im Ventilgehäuse 10 liegendes Ende 56 mit einem Entlastungskanal 58 verbunden ist. Der Entlastungskanal 58 stellt über die Leitung 59 eine Verbindung zur Füllstufe 84 des Bremsventils dar.

Die Wirkungsweise der dargestellten Anordnung ist folgende:
Im drucklosen Zustand wird der Steuerschieber 18 durch die Steuerschieberfeder 30 so weit von der Seite des Stopfens 14 weggedrückt, bis seine Schulter 60 an einer entsprechenden Verengung der Bohrung 12 anliegt, wie dies in Fig. 2 dargestellt ist. Die Rückschlagventilfeder 46 stützt sich in der Ausnehmung 44 am Steuerschieber 18 ab und drückt den Ventilkegel 52 des Ventilkörpers 50 gegen den Sitz 54, wodurch das Ende 56 der Bohrung 12 sowie der Entlastungskanal 58 verschlossen werden. Es kann sich somit im Bremsventil bei dessen anfänglichen Betätigung ein Druck im Druckraum mit dem größeren Wirkdurchmesser (Füllstufe 84) aufbauen.

Dieser Druck kann bis zu einem vorgebbaren Druck ansteigen, bei dem das Bremsventil in seine Druckphase übergeht. Bei diesem Druck hebt der Ventilkegel 52 gegen den Druck der Rückschlagventilfeder 46 von dem Sitz 54 ab, und das Rückschlagventil öffnet etwas. Durch die erste Öffnungsbewegung des Ventilkegels 52 erfolgt zunächst keine unmittelbare Verschiebung des Steuerschiebers 18, da die Federkraft der Rückschlagventilfeder 46 geringer ist als die der Steuerschieberfeder 30.

Solange der Arbeitsdruck des Bremsventils, der über den Kanal 40 auf der Stufe 42 lastet, nicht hoch genug ist, um den Steuerschieber 18 aus seiner Ruhestellung gegen die Kraft der Steuerschieberfeder 30 zu verschieben, versperrt der die Ausnehmung 44 des Steuerschiebers 18 umgebende Zylindermantel den Abfluß von dem Entlastungskanal 58 in einen in den Vorratsbehälter 62 mündenden Abflußkanal 64. Der die Ausnehmung 44 umgebende Zylindermantel 44 wirkt mit dem Abflußkanal 64 über eine Steuerkante 66 zusammen, die eine feine Dosierung des Flüssigkeitsabflusses aus dem Entlastungskanal 58 in den Vorratsbehälter 62 erlaubt.

Mit Erreichen des vorgebbaren Druckes (beispielsweise 6 bar), der die Druckphase des Bremsventils einleitet, steigt der Druck in dem Kanal 40 so weit an, daß er in der Lage ist, den Steuerschieber 18 gegen die Kraft der Steuerschieberfeder 30 in Richtung des Stopfens 14 zu verschieben. Damit verschiebt sich auch der die Ausnehmung umgebende Zylindermantel und öffnet bei der Steuerkante 66 eine Passage zwischen dem Entlastungskanal 58 und dem Abflußkanal 64, so daß sich der Druck in der Füllstufe 84 des Bremsventils langsam abbauen kann. Mit zunehmendem Arbeitsdruck wird der Steuerschieber 18 gegen die Kraft der Druckfeder 30 weiter verschoben, so daß die Passage an der Steuerkante 66 größer wird und die Vorspannung der Rückschlagfeder 46 kontinuierlich reduziert wird, wodurch eine immer stärkere Druckentlastung in der Füllstufe 84 des Bremsventils eintritt. Der Steuerschieber läßt sich maximal so weit verschieben, bis die Stirnseite 72 des Ansatzes 34 gegen den Stopfen 14 stößt.

Die Füllstufe 84 des Bremsventils wird somit nicht schlagartig entleert, sondern langsam entgegen der Federkraft der Rückschlagventilfeder 46. Würde sich die Rückschlagventilfeder 46 am Ventilgehäuse 10 abstützen, müßte der notwendige Druck in der Füllstufe zum Überwinden dieser Federkraft immer mit dem großen Füllkolben 80 erzeugt werden. Dies würde unnötig viel Kraft beanspruchen.

Der Längskanal 32 im Steuerschieber 18 verhindert, daß sich beim Öffnen des Ventilkörpers 50 eine Druckdifferenz beidseits des Steuerschiebers 18 aufbaut, durch die eine zusätzliche axiale Kraft auf dem Steuerschieber 18 lastet. Die radiale Bohrung 36 ermöglicht einen Druckausgleich auch dann, wenn der Ansatz 34 gegen den Stopfen 14 anliegt und den zentralen Längskanal 32 verschließt.

Der sich an den Stopfen 14 anschließende Bereich der Bohrung 12 steht über einen Ausgleichskanal 68 mit dem Vorratsbehälter 62 in Verbindung. Der Ausgleichskanal 68 enthält einen als Drosselstelle 70 ausgebildeten Abschnitt. Hierdurch kann sich ein Druck in der Bohrung 12 nur allmählich abbauen, was einem schnellen Öffnen des Ventilkörpers 50 entgegenwirkt. Dies führt zu einem gedämpften Verhalten, durch das mögliche Schwingungen des Ventilkörpers 50 unterdrückt werden.

Die Auslegung der Rückschlagventilfeder 46 und der Steuerschieberfeder 30 erfolgt so, daß bei einer Verschiebung des Ventilkegels 50 um den maximal möglichen Hub die durch die Rückschlagventilfeder 46 auf den Steuerschieber 18 ausgeübte Kraft lediglich zu einer Verschiebung des Steuerschiebers 18 um ca. ein zehntel seines maximalen Hubes führt.

## Patentansprüche

1. Zweistufiges Ventil, insbesondere Bremsventil, mit zwei Querschnittsstufen, deren Wirkquerschnitte nacheinander wirksam werden, indem zunächst der größere Wirkquerschnitt zum Befüllen einer Anlage verwendet wird und dann nach einer Übergangsphase ausschließlich der kleinere Wirkquerschnitt zum Aufbringen des Arbeitsdruckes eingesetzt wird, mit einem zwischen dem Druckraum (84) des größeren Wirkquerschnitts und einem Vorratsbehälter (62) angeordneten Rückschlagventil (50), das bei einem vorgebbaren, im Druckraum (84) des größeren Wirkquerschnitts herrschenden Grenzdruck öffnet, dadurch gekennzeichnet, daß die dem vorgebbaren Grenzdruck entsprechende Schließkraft des Rückschlagventils (50) in Abhängigkeit des Arbeitsdruckes steuerbar ist.

2. Ventil nach Anspruch 1, dadurch gekennzeichnet, daß der Arbeitsdruck auf einen Steuerschieber (18) wirkt, der die Schließkraft des Rückschlagventils (50) derart beeinflußt, daß diese mit steigendem Arbeitsdruck abnimmt.

3. Ventil nach Anspruch 1 oder 2, dadurch gekennzeichnet, daß das Rückschlagventil einen Ventilkörper (50) aufweist, der sich bei ausreichendem Druck im Druckraum (84) des größeren Wirkquerschnitts gegen die Kraft einer Rückschlagventilfeder (46) von einem zugehörigen Sitz (54) abhebt und eine Passage zum Vorratsbehälter (62) freigibt.

4. Ventil nach Anspruch 2 oder 3, dadurch gekennzeichnet, daß der Steuerschieber (18) wenigstens zwei Abschnitte (20, 22) mit unterschiedlichen Querschnitten aufweist und daß der Arbeitsdruck in den Bereich zwischen den beiden Abschnitten (20, 22) zugeführt wird und auf die durch die Querschnittsdifferenz gebildete Stufe (42) wirkt, während die äußeren Enden der Abschnitte (20, 22) des Steuerschiebers (18) im wesentlichen druckentlastet sind.

5. Ventil nach einem der Ansprüche 2 bis 4, dadurch gekennzeichnet, daß der Steuerschieber (18) durch wenigstens eine Steuerschieberfeder (30) gegen den Arbeitsdruck in seine Ruhelage gedrängt wird.

6. Ventil nach Anspruch 5, dadurch gekennzeichnet, daß die Steuerschieberfeder (30) an einer Stirnfläche (28) des Steuerschiebers (18) angreift, die im Abschnitt (20) des größeren Querschnittes liegt.

7. Ventil nach einem der Ansprüche 3 bis 6, dadurch gekennzeichnet, daß die Rückschlagventilfeder (46) sich an dem Steuerschieber (18) abstützt und auf diesen in gleicher Richtung wirkt wie der Arbeitsdruck.

8. Ventil nach einem der Ansprüche 3 bis 7, dadurch gekennzeichnet, daß die Rückschlagventilfeder (46) als Druckfeder ausgebildet ist, die zwischen einer Stirnfläche des Steuerschiebers (18) und dem Ventilkörper (50) des Rückschlagventils eingespannt ist.

9. Ventil nach einem der Ansprüche 5 bis 8, dadurch gekennzeichnet, daß die Federkraft der Rückschlagventilfeder (46) kleiner ist als die Federkraft der Steuerschieberfeder (30).

10. Ventil nach einem der Ansprüche 4 bis 9, dadurch gekennzeichnet, daß der durch den Steuerschieber (18) begrenzte, auf der Seite seines größeren Querschnittes liegende Abschnitt der Steuerschieberbohrung (12) durch wenigstens einen Ausgleichskanal (68) mit dem Vorratsbehälter (62) verbunden ist.

11. Ventil nach Anspruch 10, dadurch gekennzeichnet, daß der Ausgleichskanal (68) wenigstens eine Drosselstelle (70) aufweist.

12. Ventil nach einem der Ansprüche 2 bis 11, dadurch gekennzeichnet, daß der Steuerschieber (18) einen Längskanal (32) aufweist.

## Claims

1. Two-stage valve, in particular a brake valve, with two cross section stages, whose effective cross sections become effective one after the other, in that initially the larger effective cross section is used for filling an appliance and then after a transition phase exclusively the smaller effective cross section is employed for applying the working pressure, with a check valve (50) arranged between the pressure chamber (84) of the larger effective cross section and a reservoir (62) that opens when a predeterminable threshold pressure prevails in the pressure chamber (84) of the larger effective cross section, characterised in that the closing force of the check valve corresponding to the predeterminable threshold pressure is controllable as a function of the working pressure.

2. Valve according to claim 1, characterised in that the working pressure acts on a control valve spool (18) which influences the closing force of the check valve (50) in such a way that this decreases with rising working pressure.

3. Valve according to claim 1 or 2, characterised in that the check valve comprises a valve body (50) which when there is adequate pressure in the pressure chamber (84) of the larger effective cross section rises from an associated seat (54) against the force of a check valve spring (46) and frees a passage to the reservoir (62).

4. Valve according to claim 2 or 3, characterised in that the control valve spool (18) comprises at least two sections (20, 22) with different cross sections and that the working pressure is admitted into the region between both sections (20, 22) and acts on the step (42) formed by the difference in cross section, while the outer ends of the sections (20, 22) of the control valve spool (18) are essentially relieved of pressure.

5. Valve according to any of the claims 2 to 4, characterised in that the control valve spool (18) is urged into its rest position against the working pressure by at least one control valve spool spring (30).

6. Valve according to claim 5, characterised in that the control valve spool spring (30) engages an end face (28) of the control valve spool (18) which is located in the section (20) of the larger cross section.

7. Valve according to any of the claims 3 to 6, characterised in that the check valve spring (46) is braced against the control valve spool (18) and acts on this in the same direction as the working pressure.

8. Valve according to any of the claims 3 to 7, characterised in that the check valve spring (46) is constructed as a compression spring which is held between an end face of the control valve spool (18) and the valve body (50) of the check valve.

9. Valve according to any of the claims 5 to 8, characterised in that the spring tension of the check valve (46) is smaller than the spring tension of the control valve spool spring (30).

10. Valve according to any of the claims 4 to 9, characterised in that the section of the control valve spool bore (12) bounded by the control valve spool (18) and located on the side of its larger cross section is connected to the reservoir (62) by at least one equalising channel (68).

11. Valve according to claim 10, characterised in that the equalising channel (68) comprises at least one throttling point.

12. Valve according to any of the claims 2 to 11, characterised in that the control valve spool (18) comprises a longitudinal channel (32).

## Revendications

1. Soupape à deux étages, notamment soupape de frein, comportant deux étages de sections transversales, dont les sections transversales actives deviennent actives successivement par le fait que tout d'abord la section transversale active la plus grande est utilisée pour le remplissage d'une installation, puis, après une phase transitoire, exclusivement la section transversale active la plus petite est utilisée pour l'établissement de la pression de travail, comportant une soupape antiretour (50), qui est disposée entre la chambre de pression (84) de la section transversale active la plus grande et un réservoir (62) et qui s'ouvre dans le cas où une pression limite pouvant être prédéterminée règne dans la chambre de pression (84) de la section transversale active la plus grande, caractérisée en ce que la force de fermeture de la soupape antiretour (50), qui correspond à la pression limite pouvant être prédéterminée, peut être commandée en fonction de la pression de travail.

2. Soupape selon la revendication 1, caractérisée en ce que la pression de travail agit sur le tiroir de commande (18), qui influe sur la force de fermeture de la soupape antiretour (50) de telle sorte que cette force diminue lorsque la pression de travail augmente.

3. Soupape selon la revendication 1 ou 2, caractérisée en ce que la soupape antiretour possède un corps de soupape (50), qui s'écarte d'un siège associé (54), à l'encontre de la force d'un ressort (46) de la soupape antiretour, lorsqu'une pression suffisante est présente dans la chambre de pression (84) possédant la section transversale active la plus grande, et libère un passage en direction du réservoir (62).

4. Soupape selon la revendication 2 ou 3, caractérisée par le fait que le tiroir de commande (18) possède au moins deux parties (20,22) ayant des sections transversales différentes et que la pression de travail est envoyée à la zone située entre les deux parties (20,22) et agit sur la partie étagée (42) formée par la différence des sections transversales, tandis que les extrémités extérieures des parties (20,22) du tiroir de commande (18) sont pour l'essentiel déchargées de toute pression.

5. Soupape selon l'une des revendications 2 à 4, caractérisée en ce que le tiroir de commande (18) est repoussé dans sa position de repos, à l'encontre de la pression de travail, par au moins un ressort (30) du tiroir de commande.

6. Soupape selon la revendication 5, caractérisée en ce que le ressort (30) du tiroir de commande s'applique contre une face frontale (28) du tiroir de commande (18), qui est située dans la partie (20) possédant la section transversale la plus grande.

7. Soupape selon l'une des revendications 3 à 6, caractérisée en ce que le ressort (46) de la soupape antiretour prend appui sur le tiroir de commande (18) et agit sur ce dernier, dans le même sens que la pression de travail.

8. Soupape selon l'une des revendications 3 à 7, caractérisée en ce que le ressort (46) de la soupape antiretour est agencé sous la forme d'un ressort de pression, qui est serré entre une face frontale du tiroir de commande (18) et le corps de soupape (50) de la soupape antiretour.

9. Soupape selon l'une des revendications 5 à 8, caractérisée en ce que la force du ressort (46) de la soupape antiretour est inférieure à la force du ressort (30) du tiroir de commande.

10. Soupape selon l'une des revendications 4 à 9, caractérisée en ce que la partie du perçage (12) du tiroir de commande, qui est limitée par le tiroir de commande (18) et est située du côté de sa section transversale la plus grande, est reliée au réservoir (62) par au moins un canal de compensation (68).

11. Soupape selon la revendication 10, caractérisée en ce que le canal de compensation (68) possède au moins un point d'étranglement (70).

12. Soupape selon l'une des revendications 2 à 11, caractérisée en ce que le tiroir de commande (18) possède un canal longitudinal (32).
